(19) **Europäisches Patentamt**

**European Patent Office**

**Office européen des brevets**

(11) Veröffentlichungsnummer: **0 297 088**
**A1**

(12) **EUROPÄISCHE PATENTANMELDUNG**

(21) Anmeldenummer: 88890165.9

(22) Anmeldetag: 23.06.88

(51) Int. Cl.⁴: **C 01 F 5/00**

(30) Priorität: 26.06.87 AT 1621/87

(43) Veröffentlichungstag der Anmeldung:
28.12.88 Patentblatt 88/52

(84) Benannte Vertragsstaaten: **ES GR**

(71) Anmelder: **Veitscher Magnesitwerke-Actien-Gesellschaft**
**Schubertring 10-12**
**A-1010 Wien (AT)**

(72) Erfinder: **Grill, Michael, Dipl.-ing. Dr.mont.**
**Magnesitstrasse 6**
**A-8700 Leoben (AT)**

**Graf, Gerhard**
**Nagelschmiedgasse 6**
**A-8700 Leoben (AT)**

(74) Vertreter: **Pawloy, Heinrich, Dr. et al**
**Patentanwälte Dr. Heinrich Pawloy Dipl.-Ing. Helmut Sonn Dipl.-Ing. Arnulf Weinzinger Riemergasse 14**
**A-1010 Wien (AT)**

(54) **Verfahren zur Herstellung von reinem, insbesondere zur Herstellung feuerfester Erzeugnisse geeignetem Magnesiumoxid.**

(57) Verfahren zur Herstellung von reinem, insbesondere zur Herstellung feuerfester Erzeugnisse geeignetem Magnesiumoxid aus Magnesiumsilikat- und Magnesiumhydrosilikat-Materialien, wie Oliven, Serpentin, Garnierit oder dgl., wobei das Ausgangsmaterial mit Salzsäure aufgeschlossen wird, die dabei verbliebenen Rückstände von der Aufschlußtrübe abgetrennt werden und aus der so erhaltenen Rohsole die als Verunreinigungen anzusehenden Sesquioxide und andere Verunreinigungen durch Zugabe von Rohserpentin als pH-steigernde Substanz ausgefällt werden, die Niederschläge abgetrennt werden und die so erhaltene Magnesiumchloridlösung einer thermischen Zersetzung, insbesondere durch Sprührösten, unterworfen wird, bei der Magnesiumoxid gewonnen und Chlorwasserstoff wiedergewonnen wird.

EP 0 297 088 A1

**Beschreibung**

## Verfahren zur Herstellung von reinem, insbesondere zur Herstellung feuerfester Erzeugnisse geeignetem Mangesiumoxid

Die Erfindung betrifft ein Verfahren zur Herstellung von reinem, insbesondere zur Herstellung feuerfester Erzeugnisse geeignetem Magnesiumoxid aus Magnesiumsilikat- und Magnesiumhydrosilikat-Materialien, wie Olivin, Serpentin, Garnierit oder dgl., wobei das Ausgangsmaterial mit Salzsäure aufgeschlossen wird, die dabei verbliebenen Rückstände von der Aufschlußtrübe abgetrennt werden und aus der so erhaltenen Rohsole die als Verunreinigungen anzusehenden Sesquioxide und andere Verunreinigungen durch Zugabe einer pH-steigernden Substanz ausgefällt werden, die Niederschläge abgetrennt werden und die so erhaltene Magnesiumchloridlösung einer thermischen Zersetzung, insbesondere durch Sprührösten, unterworfen wird, bei der Magnesiumoxid gewonnen und Chlorwasserstoff wiedergewonnen wird.

Als Ausgangsmaterial für dieses Verfahren kommen die sogenannten ultramafitischen Gesteine der Gruppe Peridotit, Dunit, Harzburgit und dgl., deren Umwandlungsprodukte, die landläufig als Serpentin oder Serpentinit bezeichnet werden, die Verwitterungsprodukte obiger Gesteine, die bei deren Aufarbeitung anfallenden Halb- und Nebenprodukte sowie industrielle Neben-und Abfallprodukte ähnlicher Zusammensetzung in Betracht, sofern sie einen MgO-Gehalt von mindestens 15 Gew.% aufweisen. Diese Materialien werden nachstehend unter der Bezeichnung "Serpentin" bzw. "Rohserpentin" zusammengefaßt.

Bei bekannten Verfahren dieser Art wird als pH-steigernde Substanz zum Ausfällen der Sesquioxide in der Regel Magnesiumoxid eingesetzt, und zwar zumeist in Form von kaustisch gebrannter Magnesia. Die Anwendung dieses Fällungsmittels hat jedoch Nachteile. Die Serpentine und ähnliche Ausgangsmaterialien haben im allgemeinen einen hohen Gehalt an Eisen und anderen Sesquioxidverunreingungen und es sind große Zusatzmengen an Fällungsmittel erforderlich. Da alle Sorten kaustischer Magnesia teuer sind, weil sie nur unter beträchtlichem Aufwand, insbesondere an thermischer Energie, hergestellt werden können, ergibt sich aus dem einsatz von kaustischer Magnesia als Fällungsmittel eine große wirtschaftliche Belastung. Wenn man das als endprodukt des Verfahrens anfallende reine Magnesiumoxid als Fällungsmittel einsetzt, sind je nach dem Gehalt des Rohserpentins oder ähnlichen Ausgangsmaterials an Eisen und anderen Sesquioxidverunreinigungen bis zu etwa 30 Gew.% des anfallenden Magnesiumoxids in einem inneren Kreislaus zu führen, was wirtschaftlich nicht vertretbar ist.

Aus der US-PS 2 398 493 ist es bekannt, einer durch Salzsäureaufschluß von serpentin hergestellten Magnesiumchloridtrübe als Fällungsmittel der Verunreinigungen calcinierten Serpentin zuzusetzen. Diese Arbeitsweise hat jedoch den Nachteil, daß der Kieselsäureanteil des Serpentins durch den Calcinierbrand in eine Form gebracht wird, die in der Magnesiumchloridtrübe leichter löslich oder suspendierbar ist, was zur Folge hat, daß bei der folgenden Abtrennung der Rückstände bzw. der Niederschläge ein höherer Kieselsäureanteil in der Magnesiumchloridsole verbleibt und damit im Endprodukt ein höherer $SiO_2$-Gehalt auftritt. Außerdem bewirkt dieser erhöhte Gehalt an amorpher bzw. gelöster Kieselsäure in der Magnesiumchloridtrübe, daß die bei der nachfolgenden Fällung auftretenden $Fe(OH)_3$- und anderen Hydroxidniederschläge von schleimiger Beschaffenheit und dager schlecht filtrierbar sind. Schließlich bedingt der Brand des Serpentins auch einen beträchtlichen, insbesondere energetischen Aufwand.

Aufgabe der Erfindung ist es, ein Verfahren eingangs erwähnter Art zu schaffen, bei dem die angeführten Nachteile vermieden sind, und das eine wirtschaftliche Betriebsführung und die Bildung gut filtrierbarer Hydroxidniederschläge ermöglicht.

Das erfindungsgemäße Verfahren eingangs erwähnter Art ist dadurch gekennzeichnet, daß als pH-steigernde Substanz zum Ausfällen der Oxide von Eisen und von Aluminium feingemahlener Rohserpentin mit einer Körnung von 0 bis 1 mm, vorzugsweise von 0 bis 0,1 mm, eingesetzt wird.

Mit diesem Fällungsmittel wird eine vollständige Fällung des Aluminiums und eine weitgehende Fällung von dreiwertigem Eisen im pH-Bereich unter 5 erreicht.

Falls im Ausgangsmaterial zweiwertiges Eisen vorliegt und auch dieses zweiwertige Eisen entfernt werden soll, kann man gemäß einer hierauf gerichteten Ausführungsform des erfindungsgemäßen Verfahrens zur überführung des zweiwertigen Eisens zu fällbarem dreiwertigen Eisen Luft und/oder ein anderes Oxidationsmittel, wie Chlor oder Wasserstoffperoxid $H_2O_2$, unter intensivem Rühren der Rohsole in diese einbringen. Falls im Ausgangsmaterial zweiwertiges Mangan vorliegt und entfernt werden soll, ist dieses durch Oxidation in vierwertiges Mangan überzuführen. Dies kann im Rahmen einer Oxidationsbehandlung, die für das überführen von zweiwertigem Eisen in dreiwertiges Eisen vorgenommen wird, erfolgen; man kann auch für die Oxidation des Mangans eine die Oxidationsbehandlung des Eisens ergänzende Oxidationsbehandlung vornehmen.

Die beim erfindungsgemäßen Verfahren ablaufende Fällung kann sowohl in diskontinuierlicher als auch in kontinuierlicher Arbeitsweise durchgeführt werden.

Einer der Vorteile des erfindungsgemäßen Verfahrens besteht darin, daß das Ausgangsmaterial lediglich zerkleinert werden muß, aber ansonst nicht vorbehandelt, insbesondere nicht gebrannt zu werden braucht.

Im einzelnen läuft der Fällungsvorgang in folgender Weise ab: Anfangs steigt nach Zugabe des Rohserpentins zu der aus der Aufschlußtrübe durch Abtrennung des ungelöst gebliebenen Aufschlußrückstandes erhaltenen Rohsole der pH-Wert der Rohsole schnell bis etwa 4 an, wodurch die Oxidation des zunächst in der sauren Rohsole noch zweiwertigen Eisens zur dreiwertigen Form des Eisens begünstigt wird; dies zieht wiederum eine verhältnismäßig schnelle Fällung von Verunreinigungen zu Anfang des gesamten Vorganges nach sich. Später fällt der pH-Wert als Folge der Oxidation von $Fe^{++}$ zu $Fe^{+++}$ etwas ab, um dann wieder anzusteigen. Dieser Anstieg des pH-Wertes verläuft stetig und langsam, wobei der pH-Wert unter 5 bleibt.

Es ist günstig, wenn der als Fällungsmittel eingesetzte Rohserpentin in einer zwischen dem 1 1/2-fachen und 2 1/2-fachen des stöchiometrischen Bedarfes liegenden Menge der Rohsole zugesetzt wird. Als stöchiometrischer Bedarf wird dabei jene Menge an Rohserpentin angesehen, deren Gehalt an MgO zur Neutralisierung der Azidität der Rohsole ausreicht; die Azidität der Rohsole ist durch die in der sauren Rohsole vorliegende Menge an freier HC1 sowie durch den Gehalt der Rohsole an der Fällung zugänglichen oxidischen Verunreinigungen gegeben, wobei sowohl die oxidischen Verunreinigungen, welche in der Rohsole vor der Zugabe des als Fällungsmittel dienenden Rohserpentins anwesend waren, als auch die oxidischen Verunreinigungen, welche mit dem als Fällungsmittel dienenden Rohserpentin in die Rohsole eingebracht worden sind, in Rechnung zu stellen sind.

Weiter ist es vorteilhaft, wenn man für das durch Zugabe von Rohserpentin zur Rohsole bewirkte Ausfällen von Verunreinigungen die Temperatur der Rohsole über 80°C hält.

Eine weitere vorteilhafte Ausführungsform des erfindungsgemässen Verfahrens ist dadurch gekennzeichnet, daß nach Abschluß der durch Zugabe von Rohserpentin zur Rohsole bewirkten Fällung von Verunreinigungen allenfalls in der Sole noch vorhandenes Eisen sowie Mangan, Nickel und andere in der Sole ver bliebene Sesquioxidverunreinigungen in bekannter Weise durch Zugabe hiefür bekannter, pH-steigernder Substanzen ausgefällt werden, wobei vorzugsweise kaustische Magnesia oder ein beim Magnesitbrennen anfallender Flugstaub zugegeben wird.

Eine Variante dieser Ausführungsform ist dadurch gekennzeichnet, daß man die durch die Zugabe von Rohserpentin zur Rohsole bei einem unter 5 liegenden pH-Wert durchgeführte Ausfällung nur bis zum Ausfallen der Hauptmenge des Eisens- und Aluminiumhydroxids führt und daß man dann den Fällungsvorgang durch Steigerung des pH-Wertes auf 6 bis 7 mittels einer kleinen Menge kaustischer Magnesia schnell zu Ende führt. Man kann dabei z.B. die durch Zugabe von Rohserpentin bewirkte Ausfällung über etwa vier Stunden führen und den nachfolgenden Fällungsvorgang, bei dem der pH-Wert durch Zugabe kaustischer Magnesia angehoben wird, z.B. über weitere zwei Stunden.

Die Erfindung wird nun an Hand von Beispielen weiter erläutert.

**Beispiel 1:** Es wurden 1730 kg Rohserpentin, der 728 kg MgO, 122 kg $Fe_2O_3$, 4,66 kg NiO und 5 kg CaO enthielt, mit 7330 kg Salzsäure, welche einen Gehalt von 1330 kg Cl⁻ hatte, aufgeschlossen. Von der Aufschlußtrübe wurde ein unlöslich gebliebener Aufschlußrückstand in der Menge von ca. 710 kg abgetrennt und so 8350 kg saure Rohsole erhalten. Diese Rohsole, welche 713 kg MgO, 113 kg $Fe_2O_3$, 4,6 kg NiO, 1330 kg Cl⁻ und 1,8 kg CaO enthielt, wurde mit 647 kg Rohserpentin in der Körnung von 0 bis 0,1 mm als Fällungsmittel versetzt und es wurde in die Rohsole, deren Temperatur auf über 80°C gehalten wurde, unter intensivem Rühren Luft eingeleitet. Der pH-Wert stieg auf ca. 4 an und es war die Fällung nach mehreren Stunden beendet. Das ausgefällte Material wurde zusammen mit den ungelöst gebliebenen Anteilen des als Fällungsmittel zugesetzten Rohserpentins abgetrennt, wobei sich ein Filterkuchen mit 823 kg ergab. Der Filterkuchen enthielt 225 kg MgO, 157 kg $Fe_2O_3$, 1 kg NiO und 1,4 kg CaO. Die verbliebene Reinsole enthielt 748 kg MgO, 0,08 kg $Fe_2O_3$, 5,15 kg NiO, 1324 kg Cl und 3 kg CaO.

**Beispiel 2:** Es wurden 1585 kg Rohserpentin, der 667 kg MgO, 112 kg $Fe_2O_3$, 4,27 kg NiO und 4,59 kg CaO enthielt, mit 6746 kg Salzsäure, welche einen Gehalt von 1220 kg Cl⁻ hatte, aufgeschlossen. Von der Aufschlußtrübe wurde ein unlöslich gebliebener Aufschlußrückstand in der Menge von ca. 625 kg abgetrennt und so 7706 kg saure Rohsole erhalten. Diese Rohsole, welche 643 kg MgO, 104 kg $Fe_2O_3$, 4,20 kg NiO, 1220 kg Cl⁻ und 1,8 kg CaO enthielt, wurde mit 597 kg Rohserpentin in der Körnung von 0 bis 0,1 mm als Fällungsmittel versetzt und es wurde in die Rohsole, deren Temperatur auf über 80°C gehalten wurde, unter intensivem Rühren Luft eingeleitet. Der pH-Wert stieg auf ca. 4 an und wurde nach 4 Stunden Reaktionsdauer durch Zufuhr von 98 kg Flugstaub schnell auf pH 6,8 angehoben. Der Flugstaub enthielt 82 kg MgO, 5,20 kg $Fe_2O_3$ und 2.60 kg CaO. Dadurch konnte die Fällung binnen 1 Stunde vollständig gestaltet werden. Das ausgefällte Material wurde zusammen mit den ungelöst gebliebenen Anteilen der Fällungsmittel Rohserpentin und kaustische Magnesia abgetrennt, wobei sich ein Filterkuchen einer Menge von 830 kg ergab. Er enthielt 255 kg MgO, 145 kg $Fe_2O_3$, 1,85 kg CaO und 4,27 kg NiO. Die verbliebene Reinsole (7571 kg) enthielt 721 kg MgO, <0,01 kg $Fe_2O_3$, 4,25 kg CaO, <0,01 kg NiO und 1210 kg Cl⁻.

**Patentansprüche**

1. Verfahren zur Herstellung von reinem, insbesondere zur Herstellung feuerfester Erzeugnisse geeignetem Magnesiumoxid aus Magnesiumsilikat- und Magnesiumhydrosilikat-Materialien, wie Olivin, Serpentin, Garnierit oder dgl., wobei das Ausgangsmaterial mit Salzsäure aufgeschlossen wird, die dabei verbliebenen Rückstände von der Aufschlußtrübe abgetrennt werden und aus der so erhaltenen Rohsole die als Verunreinigungen anzusehenden Sesquioxide und andere Verunreinigungen durch Zugabe einer pH-steigernden Substanz ausgefällt werden, die Niederschläge abgetrennt werden und die so erhaltene Magnesiumchloridlösung einer thermischen Zersetzung, insbesondere durch SprühRösten, unterworfen wird, bei der Magnesiumoxid gewonnen und Chlorwasserstoff wiedergewonnen wird, dadurch gekennzeichnet, daß als pH-steigernde Substanz zum Ausfällen Oxide von Eisen und von Aluminium feingemahlener Rohserpentin mit einer Körnung von 0 bis 1 mm, vorzugsweise von 0 bis 0,1 mm eingesetzt wird.

2. Verfahren nach Anspruch 1, dadurch gekennzeichnet, daß zwecks Überführung von im Ausgangsmaterial vorhandenem zweiwertigen Eisen zu fällbarem dreiwertigen Eisen Luft und/oder ein anderes Oxidationsmittel unter intensivem Rühren der Rohsole in diese eingebracht wird.

3. Verfahren nach Anspruch 1 oder 2, dadurch gekennzeichnet, daß für das durch Zugabe von Rohserpentin zur Rohsole bewirkte Ausfällen von Verunreinigungen die Temperatur der Rohsole über 80° C gehalten wird.

4. Verfahren nach einem der Ansprüche 1 bis 3, dadurch gekennzeichnet, daß der als Fällungsmittel eingesetzte Rohserpentin in einer zwischen dem 1 1/2-fachen und dem 2 1/2-fachen des stöckiometrischen Bedarfes liegenden Menge der Rohsole zugesetzt wird.

5. Verfahren nach einem der Ansprüche 1 bis 4, dadurch gekennzeichnet, daß nach Abschluß der durch Zugabe von Rohserpentin zur Rohsole bewirkten Fällung von Verunreinigungen allenfalls in der Sole noch vorhandenes Eisen sowie Mangan, Nickel und andere in der Sole verbliebene Sesquioxidverunreinigungen in bekannter Weise durch Zugabe hiefür bekannter, pH-steigernder Substanzen ausgefällt werden, wobei vorzugsweise kaustische Magnesia oder ein beim Magnesitbrennen anfallender Flugstaub zugegeben wird.

6. Verfahren nach einem der Ansprüche 1 bis 4, dadurch gekennzeichnet, daß man die durch die Zugabe von Rohserpentin zur Rohsole bei einem unter 5 liegenden pH-Wert durchgeführte Ausfällung nur bis zum Ausfallen der Hauptmenge des Eisens-und Aluminiumhydroxids führt und daß man dann den Fällungsvorgang durch Steigerung des pH-Wertes auf 6 bis 7 mittels kaustischer Magnesia schnell zu Ende führt.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y | FR-A-2 471 351  (VEITSCHER MAGNESITWERKE AG) <br> * Seiten 17,18 * <br> --- | 1-3,5,6 | C 01 F   5/00 |
| Y | CHEMICAL ABSTRACTS, Band 82, Nr. 22, Juni 1975, Seite 133, Zusammenfassung Nr. 142242x, Columbus, Ohio, US; CA-A-155 586 (V. HORAK et al.) 25-04-1972 <br> * Zusammenfassung * <br> --- | 1-3,5,6 | |
| A | US-A-2 549 798  (E.A. GEE) <br> * Spalte 7 * <br> --- | 1 | |
| A | DE-A-2 137 573 (ÖSTERREICHISCH-AMERIKANISCHE MAGNESIT AG) <br> * Seiten 16,17 * <br> --- | 1,2 | |
| A | US-A-4 200 618  (F. PITTS) <br> --- | | |
| D,A | US-A-2 398 493  (C.A. BUTT) <br> ----- | | |

**RECHERCHIERTE SACHGEBIETE (Int. Cl.4)**

C 01 F

Der vorliegende Recherchenbericht wurde für alle Patentansprüche erstellt

| Recherchenort | Abschlußdatum der Recherche | Prüfer |
|---|---|---|
| DEN HAAG | 27-09-1988 | LIBBERECHT-VERBEECK E.M. |